# EUROPEAN PATENT SPECIFICATION

(11) **EP 1 918 260 B1**
(45) Date of publication and mention of the grant of the patent: **19.09.2012**
(21) Application number: 07254174.1
(22) Date of filing: 22.10.2007
(51) Int. Cl.: C03C 3/155, C03C 3/253

(54) **Optical glass for precision molding having high refractive index**
Optisches Glas mit hoher Brechzahl zum Präzisionsformen
Verre optique pour un moulage de précision ayant un indice de réfraction élevé

(30) Priority: 23.10.2006 JP 2006287874
(43) Date of publication of application: 07.05.2008
(73) Proprietor: SUMITA OPTICAL GLASS, INC., Saitama-shi, Saitama 338-8565 (JP)
(72) Inventor: Yamamoto, Yoshinori, c/o Sumita Optical Glass, Inc., Saitama City Saitama 330-8565 (JP)
(74) Representative: Brown, Fraser Gregory James

(56) References cited:
- EP-A- 1 760 048
- JP-A- 2006 327 925
- JP-A- 2006 327 926
- US-A1- 2003 191 006

## Description

### BACKGROUND OF THE INVENTION

### Field of the Invention

The present invention relates to a Bi₂O₃-B₂O₃ optical glass for precision molding having a refractive index (nd) of 2.05 or more.

### Description of the Related Art

With the spread and development of digital optical devices in recent years, there is a demand for higher performance and size-reduction of optical lenses. To meet this demand, it is essential to make optical designs by using aspheric lenses manufactured by a precision molding method. Then, an optical glass used for this aspheric lens is required to have the highest possible refractive index (nd) and the lowest possible yield temperature (At). The yield temperature is defined herein as a temperature at which glass expansion associated with temperature increase stops and contraction starts, which is almost equivalent to a glass molding temperature. However, very few conventional optical glasses have a refractive index (nd) exceeding 2.0.

As glasses having a high refractive index, known are glasses, which are disclosed in, for example, Patent Documents 1 to 5.
Patent Document 1 discloses a B₂O₃-La₂O₃ optical glass having a refractive index (nd) of 1.8 to 2.1, but does not disclose a specific composition of a glass with a refractive index (nd) higher than 2.00030. Further, the glass disclosed in Patent Document 1 contains much La₂O₃ and TiO₂, so that the glass has a high yield temperature (At).
Further, Patent Document 2 describes a glass for precision molding containing Bi₂O₃ in large quantity. In general, the refractive index of a glass becomes smaller as the wavelength is longer. The glass disclosed in Patent Document 2 has a refractive index of 1.9 or more for light with a wavelength of 0.8 µm, and a low yield temperature (At) of 540°C. However, the glass for press molding disclosed therein is applied to light with long wavelengths of about 0.8 to 1.8 µm, and not developed on the premise of the use in the visible light region. In other words, since the glass is thickly colored, the glass disadvantageously has a remarkably low light transmission performance in the visible light region, particularly in the blue region.
Furthermore, all the glasses disclosed in Patent Documents 3 to 5 relate to glass fibers used for optical communication. They relate to glasses for optical fibers intended for application to the optical communication field on the premise of the use in the infrared light region.
As described above, among optical glasses used for conventional optical lenses, particularly aspheric lenses manufactured by precision molding, there are no highly-refractive optical glasses having a high refractive index (nd) of 2.05 or more. Thus, there has been a demand for developing such highly-refractive optical glasses.
[Patent Document 1] Japanese Patent Laid-Open No. 2005-179142
[Patent Document 2] Japanese Patent Laid-Open No. 2002-201039
[Patent Document 3] National Publication of International Patent Application No. 2005-502576
[Patent Document 4] National Publication of International Patent Application No. 2006-518325
[Patent Document 5] National Publication of International Patent Application No. 2005-503008
EP-A-1760048 is part of the state of the art under Article 54(3)EPC. This document relates to optical glass containing Bi₂O₃ and optionally GeO₂.
US2003/0191006 discloses a glass for press moulding which is lead-free and comprises Bi₂O₃, B₂O₃ and SiO₂ and optionally certain other metal oxides for modifying physical properties.

An object of the present invention is to provide an optical glass for precision molding having a high refractive index (nd) and a low yield temperature (At) on the premise of its use in the visible light region.

### SUMMARY OF THE INVENTION

The present inventors have made intensive research for achieving the above object. As a result, they have found that the above object can be achieved by a Bi₂O₃-B₂O₃ optical glass.

Namely, an optical glass for molding of the present invention comprises as glass components in wt%,
64 to 83% of Bi₂O₃;
4 to 17% of B₂O₃;
0 to 12% of GeO₂ (wherein the total of B₂O₃ and GeO₂ is 10 to 20%);
0 to 7% of La₂O₃;
0 to 7% of Gd₂O₃ (wherein the total of La₂O₃ and Gd₂O₃ is 1 to 13%);
0 to 4% of ZrO₂;
0 to 5% of Ta₂O₅;
0 to 15% of ZnO;
0 to 2% of Sb₂O₃; and
0 to 1 % of In₂O₃.
The optical glass has optical constants, that is, a refractive index (nd) of 2.05 to 2.25 and an Abbe number (vd) of 15 to 22, and a yield temperature (At) of 510°C or less.

The present invention can provide an optical glass for precision molding having a refractive index (nd) of 2.05 or more and a yield temperature (At) of 510°C or less.

### DETAILED DESCRIPTION OF THE PREFERRED EMBODIMENTS

Hereafter, the present invention is described in detail.
An optical glass for precision molding of the present invention has a compositional feature of comprising Bi₂O₃ and B₂O₃ as essential components, and the optical glass comprises at least, in wt%: 64 to 83% of Bi₂O₃; 4 to 17% of B₂O₃; 0 to 12% of GeO₂ (wherein the total of B₂O₃ and GeO₂ is 10 to 20%); 0 to 7% of La₂O₃; 0 to 7% of Gd₂O₃ (wherein the total of La₂O₃ and Gd₂O₃ is 1 to 13%); 0 to 4% of ZrO₂; 0 to 5% of Ta₂O₅; 0 to 15% of ZnO; 0 to 2% of Sb₂O₃; and 0 to 1 % of In₂O₃.
The optical glass having the above composition is a stable glass having a refractive index (nd) of 2.05 to 2.25, an Abbe number (vd) of 15 to 22, and a yield temperature (At) of 510°C or less.

The reason for limiting each component of the optical glass of the present invention to the above composition is as follows.
Bi₂O₃ is an essential component and is a very important component for lowering a yield temperature (At) as well as raising a refractive index for the glass of the present invention. However, less than 64 wt% of Bi₂O₃ cannot provide a desired refractive index, and more than 83 wt% thereof results in a very unstable glass. Thus, the content of Bi₂O₃ is 64.0 to 83.0 wt%, preferably 64.0 to 82.0 wt%.

B₂O₃ is also an essential component of the present invention for forming a glass network structure. B₂O₃ has effects of enhancing melting properties of glass and easily vitrifying other raw material components. However, less than 4 wt% of B₂O₃ deteriorates devitrification resistance and more than 17 wt% thereof cannot offer a desired refractive index. The content thereof is preferably 5.0 to 16.0 wt%.

GeO₂ is an optional component of the present invention and a very effective component for raising a refractive index of glass. GeO₂ is a component for forming a glass network structure, like B₂O₃, but has a poor ability to enhance devitrification resistance. Thus, more than 12 wt% of GeO₂ increases devitrification tendency, resulting in an unstable glass. Preferably, the content thereof is 0 to 11.0 wt%.
Then, if the total content of B₂O₃ and GeO₂ is out of the range from 10 to 20 wt%, a glass cannot be obtained. The range is preferably from 12.0 to 18.0 wt%.

La₂O₃ is an optional component of the present invention, but a component for enhancing a refractive index without coloring a glass. Further, mixing of La₂O₃ with B₂O₃ in this composition is effective to devitrification resistance, but more than 7 wt% of La₂O₃ deteriorates devitrification resistance. The content thereof is preferably 0 to 6.0 wt%.

Gd₂O₃ is an optional component of the present invention. Combined use thereof with La₂O₃ enhances devitrification resistance, but more than 7 wt% thereof deteriorates devitrification resistance. The content thereof is preferably 0 to 6.0 wt%.
Then, if the total content of La₂O₃ and Gd₂O₃ is out of the range from 1 to 13 wt%, a glass cannot be obtained. The range is preferably from 1.5 to 12.0 wt%.

ZrO₂ is an optional component of the present invention. A small amount of addition thereof enhances devitrification resistance and chemical durability, but more than 4 wt% thereof deteriorates devitrification resistance. The content thereof is preferably 0 to 3.0 wt%.

Ta₂O₅ is an optional component of the present invention. Ta₂O₅ can stabilize a glass, but more than 5 wt% thereof destabilize a glass. The content thereof is preferably 0 to 4.0 wt%.

ZnO is an optional component of the present invention, which has an effect of keeping a yield temperature (At) low and can enhance solubility, devitrification resistance, and chemical durability. However, more than 15 wt% thereof makes it difficult to provide a desired refractive index. The content thereof is preferably 0 to 14 wt%.

In addition to the above components, the addition of Sb₂O₃ and In₂O₃ can lighten the color of glass. The addition amounts of Sb₂O₃ and In₂O₃ are 0 to 2.0 wt% and 0 to 1.0 wt%, respectively. Further additionally, SiO₂, TiO₂, Li₂O, Na₂O, K₂O, MgO, CaO, SrO, BaO, Al₂O₃ Ga₂O₃, Y₂O₃, Yb₂O₃ or the like may be incorporated for controlling the optical constants, improving the melting property, and increasing glass stability as long as the object of the present invention is satisfied. However, no addition of these components is preferable in order to obtain a good quality glass conforming more to the above object.

### EXAMPLE

Hereafter, an optical glass of the present invention is described in detail by referring to Examples, but the present invention is not limited to these Examples.
Optical glasses of Examples 1 to 10 were produced by: weighing each raw material compound so that each Example had a proportion of component composition as shown in the column of composition in the following Table 1; sufficiently mixing the raw material compounds; inputting them in a platinum crucible to melt at 900 to 1150°C by an electric furnace; stirring the mixture for homogenization at appropriate timings; clarifying and then casting the mixture in a metallic mold preheated at a suitable temperature; and gradually cooling. In the tables, each component for composition is expressed in wt% and mol%.
The obtained optical glasses of Examples 1 to 10 were measured by known methods in terms of optical constants (refractive index (nd) and Abbe number (vd)) and the yield temperature (At/°C). Results are shown in Table 1 together with the composition of each optical glass.

**Table 1**

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| | GeO₂ | 5.61 (12.66) | 4.84 (9.09) | 10.15 (24.58) | 8.60 (23.29) | - | 1.13 (2.68) | 4.50 (10.54) | 2.16 (5.36) | 4.00 (9.34) | 8.64 (21.16) |
| | B₂O₃ | 11.09 (37.58) | 9.62 (27.11) | 7.84 (28.54) | 5.34 (21.74) | 15.11 (53.12) | 13.88 (49.51) | 13.0 (45.74) | 12.28 (45.71) | 13.00 (45.64) | 7.90 (29.08) |
| | La₂O₃ | 5.65 (4.09) | 2.75 (1.66) | 2.64 (2.05) | 2.77 (2.40) | 2.73 (2.05) | 5.50 (4.19) | - | 1.42 (1.13) | 2.00 (1.50) | 5.20 (4.10) |
| Composition | Gd₂O₃ | 5.79 (3.77) | 2.82 (153) | 2.71 (1.89) | 2.84 (2.22) | 2.80 (1.89) | - | 2.00 (1.35) | 1.42 (1.01) | 2.00 (1.35) | 5.33 (3.77) |
| | ZrO₂ | 2.76 (5.28) | 0.83 (1.33) | 0.80 (1.64) | 0.84 (1.92) | 0.83 (1.64) | 0.83 (1.67) | - | 0.47 (0.99) | 0.50 (0.99) | 1.10 (2.28) |
| | Bi₂O₃ | 64.73 (32.79) | 64.31 (27.11) | 74.12 (40.30) | 77.78 (47.26) | 76.73 (40.30) | 77.15 (41.10) | 78.50 (41.26) | 81.31 (45.24) | 78.50 (41.18) | 68.38 (37.61) |
| | Ta₂O₅ | 3.74 (2.00) | 1.82 (0.81) | 1.74 (1.00) | 1.83 (1.17) | 1.80 (1.00) | 1.51 (0.85) | 2.00 (1.11) | 0.94 (0.56) | - | 3.45 (2.00) |
| | ZnO | 0.63 (1.83) | 13.0 (31.36) | - | - | - | - | - | - | - | - |
| | nd | 2.07313 | 2.06095 | 2.12609 | 2.19767 | 2.07384 | 2.09480 | 2.09324 | 2.1200s | 2.09293 | 2.11951 |
| Characteristic value | vd | 20.34 | 19.29 | 18.07 | 16.28 | 19.54 | 18.87 | 18.73 | 17.96 | 18.74 | 20.98 |
| | At/°C | 509 | 463 | 461 | 440 | 467 | 454 | 454 | 438 | 451 | 489 |

| | | | | | | | | | | | |
|---|---|---|---|---|---|---|---|---|---|---|---|
| *Unit of Composition is wt% in this Table (mol% notation in brackets). | | | | | | | | | | | |

Table 1 shows that each optical glass of the present invention shown in Examples has a refractive index (nd) of 2.05 to 2.25 and an Abbe number (vd) of 15 to 22, and a yield temperature (At) of 510°C or less.

## Claims

1. An optical glass for precision molding comprising, as glass components in wt%,
64 to 83% of Bi₂O₃;
4 to 17% of B₂O₃;
0 to 12% of GeO₂, wherein the total of B₂O₃ and GeO₂ is 10 to 20%;
0 to 7% of La₂O₃;
0 to 7% of Gd₂O₃
0 to 4% of ZrO₂;
0 to 5% of Ta₂O₅;
0 to 15% of ZnO;
0 to 2% of Sb₂O₃; and
0 to 1% of In₂O₃,
the optical glass having optical constants, that is, a refractive index (nd) of 2.05 to 2.25 and an Abbe number (vd) of 15 to 22, and a temperature (At) at which glass expansion associated with temperature increase stops and contraction starts (yield temperature) of 510°C or less, **characterized in that** the total of La₂O₃ and Gd₂O₃ is 1 to 13%.

## Patentansprüche

1. Optisches Glas zum Präzisionsformen, umfassend als Glaskomponenten in Gewichts-%:
| | |
|---|---|
| 64 bis 83% | Bi₂O₃; |
| 4 bis 17% | B₂O₃; |
| 0 bis 12% | GeO₂, wobei die Gesamtmenge an B₂O₃ und GeO₂ 10 bis 20% beträgt; |
| 0 bis 7% | La₂O₃; |
| 0 bis 7% | Gd₂O₃; |
| 0 bis 4% | ZrO₂; |
| 0 bis 5% | Ta₂O₅; |
| 0 bis 15% | ZnO; |
| 0 bis 2% | Sb₂O₃; und |
| 0 bis 1% | In₂O₃, |
wobei das optische Glas optische Konstanten aufweist, nämlich eine Brechzahl (nd) im Bereich von 2,05 bis 2,25 und eine Abbé-Zahl (vd) von 15 bis 22 sowie eine Temperatur (At) bei der eine Glasexpansion, die mit einer Temperaturerhöhung einhergeht, aufhört und eine Kontraktion beginnt (yield temperature) von 510°C oder weniger, **dadurch gekennzeichnet, dass** die Gesamtmenge an La₂O₃ und Gd₂O₃ 1 bis 13% beträgt.

## Revendications

1. Verre optique pour moulage de précision comprenant, en tant que composants du verre en % en poids,
64 à 83 % de Bi₂O₃ ;
4 à 17 % de B₂O₃ ;
0 à 12 % de GeO₂, le total de B₂O₃ et de GeO₂ étant de 10 à 20 % ;
0 à 7 % de La₂O₃ ;
0 à 7 % de Gd₂0₃ ;
0 à 4 % de ZrO₂ ;
0 à 5 % de Ta₂O₅ ;
0 à 15 % de ZnO ;
0 à 2 % de Sb₂O₃ ; et
0 à 1 % de In₂O₃,
le verre optique ayant des constantes optiques, à savoir, un indice de réfraction (nd) de 2,05 à 2,25 et un nombre d'Abbe (vd) de 15 à 22, et une température (At) à laquelle la dilatation du verre associée à une augmentation de température s'arrête et la contraction commence (température limite d'élasticité) de 510°C ou moins, **caractérisé en ce que** le total de La₂O₃ et de Gd₂O₃ est de 1 à 13 %.
